# FASCICULE DE BREVET EUROPEEN

(11) **EP 3 114 033 B1**
(45) Date de publication et mention de la délivrance du brevet: **18.11.2020**
(21) Numéro de dépôt: 15711255.8
(22) Date de dépôt: 27.02.2015
(51) Int. Cl.: B64F 1/20, E02D 5/80

(54) **BALISE INFRAROUGE POUR PISTE D'ATTERRISSAGE**
INFRAROTLEUCHTFEUER ZUR MARKIERUNG EINER LANDEPISTE
INFRARED LANDING STRIP BEACON

(30) Priorité: 04.03.2014 FR 1451725
(43) Date de publication de la demande: 11.01.2017
(73) Titulaire: Musthane, 59780 Willems (FR)
(72) Inventeur: ROSIER, Reza, B-7711 Dottignies (BE)
(74) Mandataire: Cabinet Beau de Loménie
(86) Numéro de dépôt international: PCT/FR2015/050476
(87) Numéro de publication internationale: WO 2015/132511

(56) Documents cités:
- EP-A1- 0 884 420
- EP-A1- 0 884 420
- BE-A3- 1 019 470
- DE-A1- 19 511 813
- DE-A1- 19 511 813
- US-A- 5 436 812
- US-A1- 2003 133 291
- US-A1- 2003 133 291
- US-A1- 2004 113 817
- US-A1- 2004 113 817
- US-B1- 7 023 361
- US-B1- 7 023 361

## Description

### Arrière-plan de l'invention

La présente invention concerne le domaine des pistes d'atterrissage et de décollage pour aéronefs, notamment mais pas exclusivement pour hélicoptères.

L'invention concerne plus précisément une balise infrarouge pour piste d'atterrissage et décollage qui permet au pilote de l'aéronef de repérer la piste lors d'un atterrissage nocturne.

Elle trouve plus particulièrement son application dans le balisage de pistes installées de manière temporaire dans des régions désertiques ou polaires.

De telles régions sont généralement dépourvues de pistes d'atterrissage et de décollage pour hélicoptères. Pour résoudre ce problème, il est connu d'installer une piste temporaire sur le sol, cette dernière pouvant prendre la forme d'un tapis rectangulaire de grandes dimensions.

La piste d'atterrissage doit également être localisable par les pilotes afin de permettre un atterrissage de nuit de l'aéronef. Lorsqu'il s'agit d'un usage militaire, cet éclairage nocturne doit être discret, faute de quoi il serait aisé de repérer la position de la piste. Pour ce faire, on utilise traditionnellement des lampes infrarouges alimentées par des batteries.

Les lampes utilisées traditionnellement émettent un puissant faisceau de lumière infrarouge, qui présente l'inconvénient de gêner les pilotes munis de dispositifs de vision nocturne. Les pilotes doivent alors retirer leurs dispositifs de vision nocturne afin de finaliser l'atterrissage à vue, ce qui est malcommode et risqué.

On connait également des balises infrarouges constituées d'un tube plastique dans lequel sont logées des batteries, et à l'extrémité duquel est disposée une ampoule IR. Une telle balise présente notamment l'inconvénient de pouvoir être endommagée si l'aéronef vient à la percuter, par exemple lors d'une phase d'atterrissage.

L'arrière-plan technologique est illustré par le document US 2003/0133291 A1.

### Objet et résumé de l'invention

Un but de la présente invention est de proposer une balise infrarouge pour piste d'atterrissage balisant de manière plus efficace que le dispositif de l'art antérieur la piste d'atterrissage tout en étant plus robuste et stable.

Pour ce faire, l'invention porte sur une balise infrarouge pour piste d'atterrissage d'un aéronef qui comporte :
un plateau de support destiné à être posé au sol ;
un boîtier fixé sur le plateau de support et comprenant une paroi supérieure, au moins une première paroi latérale s'étendant entre e plateau de support et la paroi supérieure, et une deuxième paroi latérale adjacente à la première paroi latérale, telles que, considérées dans un plan parallèle au plateau de support, les dimensions transversales du plateau de support sont supérieures aux dimensions transversales du boîtier, de sorte que le plateau de support présente au moins deux portions de fixation s'étendant latéralement à l'extérieur du boîtier selon deux bords latéraux adjacents du boîtier, lesdites portions de fixation comportant des moyens de fixation pour la fixation de la balise au sol, les moyens de fixation comprenant au moins deux orifices de fixation, chaque orifice de fixation étant ménagé dans l'une des portions de fixation;
un module d'éclairage infrarouge comprenant au moins un premier émetteur de lumière infrarouge et un deuxième émetteur de lumière infrarouge, le premier émetteur de lumière infrarouge étant logé au moins en partie dans la première paroi latérale et ayant une première direction d'éclairage inclinée par rapport au plateau de support, et le deuxième émetteur de lumière infrarouge étant logé au moins en partie dans la deuxième paroi latérale et ayant une deuxième direction d'éclairage inclinée par rapport au plateau de support.

Les dimensions du plateau offrent une plus grande envergure de base à la balise ce qui augmente sensiblement sa portance et empêche donc le dispositif de s'enfoncer dans des sols meubles tels que la boue, le sable ou la neige.

En outre, le fait que les moyens de fixations de la balise soient disposés sur les portions de fixation qui débordent latéralement par rapport au boitier permet de faciliter les opérations de montage et démontage. L'invention permet ainsi de monter et démonter rapidement le système de balisage d'une piste d'atterrissage.

Avantageusement, le boîtier est réalisé dans un matériau rigide résistant à l'écrasement, de préférence en métal ou en matériau composite, et présente une hauteur sensiblement inférieure à l'envergure du plateau de support conférant au boîtier une forme compacte, si bien qu'un aéronef ou tout autre véhicule peut rouler dessus sans l'endommager.

Du fait de sa structure compacte et rigide, le boîtier est robuste et peut être avantageusement utilisé dans des conditions extrêmes, comme sur le sable ou la neige. De préférence, mais pas exclusivement, le boîtier présente une forme pyramidale dont la paroi supérieure est tronquée, la paroi supérieure étant alors sensiblement parallèle au plateau de support.

Grâce aux moyens de fixation, la balise peut être sécurisée en position et ne peut être déplacée lorsqu'un véhicule roule dessus par exemple.

Selon un aspect particulièrement avantageux de l'invention, les moyens de fixation comprennent au moins un organe de fixation, grâce à quoi on va pouvoir fixer la balise au sol en faisant coopérer l'orifice de fixation avec un organe de fixation et ainsi utiliser un nombre réduit d'outils nécessaires au maintien au sol de la balise, sans compromettre la solidité de la fixation.

Préférentiellement, considéré selon la longueur de la première paroi latérale, l'orifice de fixation est disposé à proximité d'une première extrémité de la première paroi latérale, tandis que le premier émetteur de lumière infrarouge est disposé à une seconde extrémité de la première paroi latérale opposée à la première extrémité de la première paroi latérale.

L'intérêt de décaler l'orifice de fixation et l'émetteur de lumière infrarouge est de ne pas masquer l'émetteur lorsqu'un organe de fixation coopère avec la portion de fixation et donc de ne pas éclipser le faisceau lumineux, quelle que soit la position de l'aéronef. Le pilote repère alors aisément la balise lors de l'approche de la piste d'atterrissage.

De préférence, mais pas exclusivement, l'organe de fixation comporte un élément de verrouillage destiné à s'appuyer sur la paroi supérieure de la portion de fixation du plateau de support. L'organe de fixation comporte également une ancre, destinée à être enfoncée dans le sol, et qui est reliée à l'élément de fixation par l'intermédiaire d'un lien traversant l'orifice de fixation. On comprend qu'une telle réalisation permet une fixation solide de la balise au sol, sans constituer un danger pour une personne ou un véhicule au contraire d'un piquet ou d'une tige de fixation faisant saillie et qui pourrait endommager le pneu de la roue de l'aéronef roulant sur la balise. Un exemple d'un tel organe de fixation est notamment divulgué dans WO 2014/170574.

Le fait que le premier émetteur de lumière infrarouge soit logé au moins en partie dans la première paroi latérale du boîtier participe également à la compacité de la balise. De préférence, le premier émetteur traverse la première paroi latérale.

Par direction d'éclairage, on entend la direction du faisceau lumineux émis par le premier émetteur de lumière infrarouge. Grâce à l'inclinaison de la première direction d'éclairage par rapport au plateau de support, le pilote repère plus aisément la balise infrarouge, en particulier lorsque la balise infrarouge est située en un coin de la zone d'atterrissage, la première direction d'éclairage étant alors sensiblement parallèle à un bord de ladite zone d'atterrissage.

De préférence, la première direction d'éclairage est également inclinée par rapport à une direction perpendiculaire au plateau de support.

On comprend que le faisceau lumineux borde la zone d'atterrissage depuis l'un de ses coins, ce qui permet d'indiquer au pilote comment la piste se situe par rapport à la balise infrarouge.

Selon un aspect avantageux de l'invention, l'angle d'inclinaison entre la première direction d'éclairage et le plateau de support est compris entre 10° et 60°, de préférence entre 15° et 30°. Ces valeurs d'inclinaison présentent le triple intérêt d'améliorer le repérage à distance de la balise, de faciliter le repérage par le pilote de la position de la piste d'atterrissage par rapport à la balise infrarouge, sans éblouir le pilote qui peut procéder à l'atterrissage de nuit sans avoir à retirer son dispositif de vision nocturne.

Avantageusement, pour améliorer le repérage de la balise infrarouge, le module d'éclairage infrarouge comporte en outre un deuxième émetteur de lumière infrarouge ayant une deuxième direction d'éclairage inclinée par rapport au plateau de support.

La présence d'un deuxième émetteur de lumière infrarouge a également pour intérêt d'améliorer encore le repérage à distance de la balise et donc de la zone d'atterrissage.

Préférentiellement, la deuxième direction d'éclairage est inclinée par rapport à la première direction d'éclairage. Un premier intérêt est d'augmenter la visibilité de la balise en permettant un repérage depuis plusieurs angles de vues. Un deuxième intérêt est de faciliter le repérage de la piste d'atterrissage, notamment lorsque la balise est positionnée à l'un des coins de la zone d'atterrissage, les deux faisceaux de lumière IR balisant alors deux bords adjacents de la zone d'atterrissage.

De préférence, l'angle d'inclinaison entre la première direction d'éclairage et la deuxième direction d'éclairage est environ égal à 90°, ce qui permet d'assurer un repérage précis d'une zone d'atterrissage de forme rectangulaire ou carrée. Plus précisément, lorsqu'une telle balise est disposée à un coin de la zone d'atterrissage carrée ou rectangulaire, la balise permet non seulement de baliser le coin de la piste, mais également de signaliser les bords adjacents de la zone d'atterrissage.

Selon l'invention, le boîtier comporte une deuxième paroi latérale inclinée par rapport à la première paroi latérale, et le deuxième émetteur de lumière infrarouge est fixé à la deuxième paroi latérale. Avantageusement, le deuxième émetteur est logé au moins en partie dans la deuxième paroi latérale qui s'étend également entre le plateau de support et la paroi supérieure. Selon une variante avantageuse, les première et deuxième parois latérales sont sensiblement orthogonales entre elles, de sorte que les première et deuxième directions d'éclairage soient également orthogonales entre elles, ce qui permet avantageusement de baliser une zone d'atterrissage rectangulaire.

De manière avantageuse, les premier et deuxième émetteurs de lumière infrarouge sont disposés aux extrémités des première et deuxième parois latérales qui sont adjacentes l'une de l'autre de façon que les premier et deuxième émetteurs sont disposés à proximité l'un de l'autre, de part et d'autre d'une arête définie entre la première paroi latérale et la deuxième paroi latérale. Un premier intérêt est de minimiser la longueur des câbles électriques dans le boîtier, ce qui améliore encore la robustesse de la balise. Un deuxième intérêt de placer les émetteurs de lumières à proximité de ladite arête, et non pas aux centres des parois latérales, est de permettre une continuité lumineuse lors de l'approche de l'aéronef. Selon un mode de réalisation préférentiel, ledit premier émetteur de lumière infrarouge comporte au moins une diode électroluminescente logée au moins en partie dans la première paroi latérale. De préférence, le deuxième émetteur de lumière infrarouge comporte également au moins une diode électroluminescente logée au moins en partie dans la deuxième paroi latérale.

Un intérêt d'utiliser une diode électroluminescente est tout d'abord sa consommation énergétique. Un autre intérêt est sa faible intensité qui a pour avantage de ne pas éblouir le pilote de l'hélicoptère muni du dispositif de vision nocturne qui amplifie les signaux infrarouges.

De préférence, la (ou les) diode(s) traverse(nt) la paroi dans laquelle elle est logée.

En variante, l'émetteur de lumière, et notamment la diode, affleure la face extérieure de la paroi latérale, de manière à éviter d'être endommagée dans le cas où un véhicule roulerait sur la balise.

Avantageusement, la balise comporte une source d'énergie électrique logée dans le boîtier et alimentant le module d'éclairage infrarouge.

Selon une première variante, la source d'énergie électrique comporte au moins une batterie.

Toutefois, selon un aspect particulièrement avantageux de l'invention, la source d'énergie électrique comporte au moins un panneau photovoltaïque. Le panneau photovoltaïque est préférentiellement associé à une batterie logée dans le boîtier. On comprend alors que le panneau photovoltaïque charge la batterie pendant la journée tandis que la batterie alimente le ou les émetteurs de lumière infrarouge pendant la nuit afin de baliser la piste.

Un intérêt est que la balise est autonome en énergie, en ce sens que, contrairement à l'art antérieur, l'utilisateur n'a pas besoin de procéder à un changement des piles.

De manière préférentielle, la paroi supérieure est munie d'une fenêtre, et le panneau photovoltaïque est disposé sous ladite fenêtre. De préférence, la fenêtre s'étend sensiblement dans le même plan que la paroi supérieure. Encore de préférence, la fenêtre comporte une vitre, ce qui permet de protéger l'intérieur du boîtier. Notamment, la vitre est agencée de façon à empêcher l'eau, le sable ou la poussière d'entrer dans le boîtier.

Encore de préférence, la vitre est logée dans et affleure la paroi supérieure du boîtier. Un intérêt est d'éviter d'endommager la vitre si un véhicule roule sur la balise.

Avantageusement, la balise comporte en outre un organe de commande connecté à la source d'énergie électrique et au module d'éclairage et configuré de sorte que le module d'éclairage est actionné pendant la nuit. De préférence, l'organe de commande comprend un interrupteur crépusculaire. Encore de préférence, l'organe de commande est agencé de telle sorte que le panneau photovoltaïque recharge la batterie pendant la journée, tandis que le ou les émetteurs de lumières sont actionnés pendant la nuit en étant alimentés par la batterie.

Avantageusement, le boîtier est réalisé dans un matériau rigide résistant à l'écrasement et présente une hauteur sensiblement inférieure à l'envergure du plateau de support conférant au boîtier une forme compacte.

L'invention porte également sur une piste d'atterrissage d'aéronef comportant une zone d'atterrissage et une pluralité de balises infrarouges selon l'invention disposées aux coins de la zone d'atterrissage.

Bien entendu, les balises peuvent également être disposées à proximité de la zone d'atterrissage afin de baliser la phase d'approche de l'aéronef, par exemple en signalisant un couloir d'approche.

De préférence, la zone d'atterrissage est constituée d'un grand tapis souple.

### Brève description des dessins

L'invention sera mieux comprise à la lecture de la description qui suit d'un mode de réalisation de l'invention donnés à titre d'exemple non limitatif, en référence aux dessins annexés, sur lesquels :
- la figure **1** est une vue en perspective d'un mode de réalisation préféré de la balise infrarouge selon l'invention ;
- la figure **2** illustre une piste d'atterrissage selon l'invention, installée dans un désert, comportant quatre balises conformes à la figure **1** ;
- la figure **3** est une vue de dessus de la balise de la figure **1** ; et
- la figure **4** est une vue latérale en coupe de la balise de la figure **1****.**

### Description détaillée de l'invention

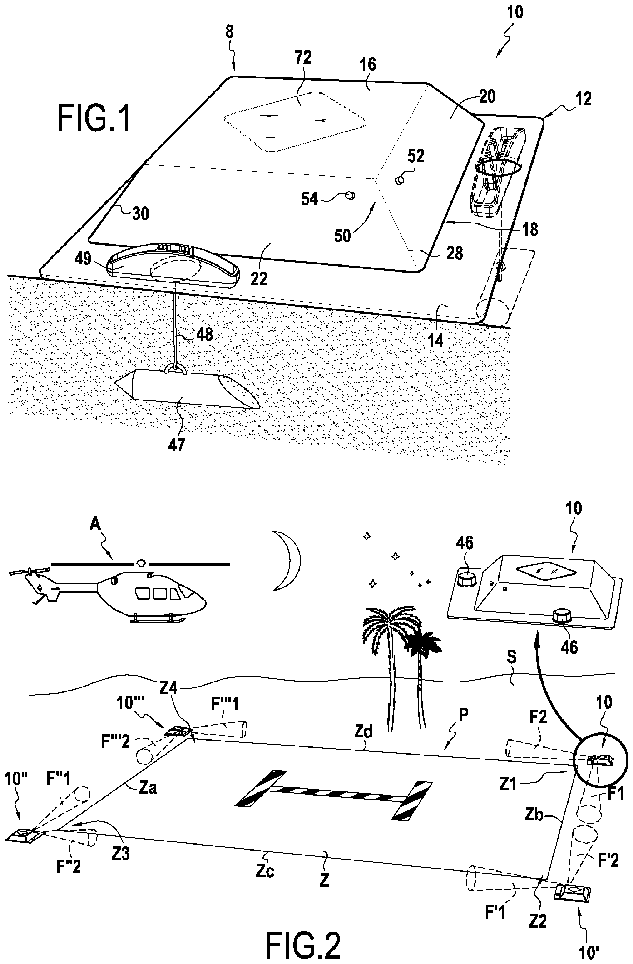

Sur la figure **1**, on a illustré un mode de réalisation d'une balise infrarouge **10** destinée à équiper une piste d'atterrissage **P** illustrée sur la figure **2**. Dans cet exemple, la piste d'atterrissage **P** est une piste permettant l'atterrissage, ainsi que le décollage, d'un aéronef **A**, en l'espèce un hélicoptère.

La piste d'atterrissage **P** comporte une zone d'atterrissage **Z**, constituée dans cet exemple d'un grand tapis de format rectangulaire posé sur le sable, dont les dimensions sont adaptées pour réceptionner l'hélicoptère **A**. Comme on le constate sur la figure **2****,** la piste d'atterrissage **P** comporte quatre balises infrarouges **10**, **10'**, **10"**, **10'"** qui sont disposées aux quatre coins **Z1**, **Z2**, **Z3**, **Z4** de la zone d'atterrissage **Z**. Dans cet exemple, bien que les balises **10**, **10'**, **10"**, **10"'** soient disposées à l'extérieur de la zone d'atterrissage **Z**, ces dernières pourraient tout-à-fait être positionnées à l'intérieur de la zone d'atterrissage **Z**.

Les balises infrarouges sont destinées à baliser la zone d'atterrissage **Z** de la piste d'atterrissage **P** afin de permettre au pilote de l'hélicoptère **A** de repérer la piste d'atterrissage grâce à son dispositif de vision nocturne qui lui permet de voir la lumière infrarouge, sans que la piste d'atterrissage ne soit localisable par des personnes qui ne sont pas munies de dispositif de vision nocturne. L'invention trouve ainsi tout son intérêt dans une application militaire.

En se référant à nouveau à la figure **2**, on constate que chacune des balises infrarouges **10**, **10'**, **10"**, **10**"', émet deux faisceaux de lumière infrarouge, **F1**, **F2**, **F1'**, **F2'**, **F1"**, **F2"**, **F1'"**, **F2'"**, qui sont sensiblement parallèles aux bords Za, Zb, Zc, Zd de la zone d'atterrissage Z. Dans cet exemple, les deux faisceaux émis par chacune des balises sont sensiblement perpendiculaires l'un à l'autre. Les faisceaux pourraient présenter une autre inclinaison dans le cas où la zone d'atterrissage présenterait une autre forme géométrique, par exemple une forme hexagonale ou octogonale.

En se référant à nouveau à la figure **1**, on constate que la balise infrarouge **10** comporte un boîtier **8** qui est fixé sur un plateau de support **12** destiné à être posée au sol, par exemple sur le sable, la neige, ou tout autre type de sol. On précise que le plateau de support peut être également posé sur la zone d'atterrissage, cette dernière étant elle-même posée sur le sol.

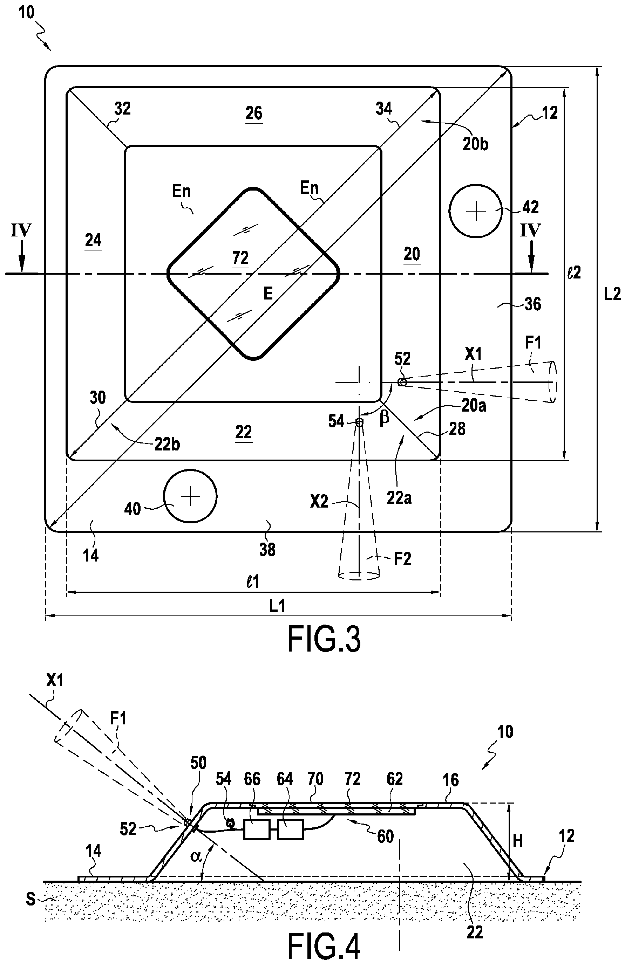

Le boîtier comporte en outre une paroi supérieure **16**, une paroi périphérique **18** constituée ici de quatre parois latérales, mieux visibles sur la figure **3**, à savoir une première paroi latérale **20**, une deuxième paroi latérale **22**, une troisième paroi latérale **24** et une quatrième paroi latérale **26**. Chacune de ces parois latérales **20**, **22**, **24**, **26** s'étend entre le plateau de support et la paroi supérieure. Dans cet exemple, le boîtier **8** présente la forme d'une pyramide tronquée présentant une base rectangulaire, sensiblement carrée.

Dans cet exemple, les quatre parois latérales sont perpendiculaires les unes aux autres. Toutefois, sans sortir du cadre de l'invention, les parois latérales pourraient être inclinées l'une à l'autre sans être nécessairement perpendiculaires.

En outre, dans ce mode de réalisation, les parois latérales **20**, **22**, **24**, **26** sont séparées les unes des autres par des arêtes **28**, **30**, **32**, **34**. On précise que ces arêtes peuvent être franches ou bien arrondies. Dans l'exemple de la figure **1**, la paroi supérieure **16** est plate, et s'étend dans un plan sensiblement horizontal. Dans une variante, la paroi supérieure pourrait être légèrement bombée. Alternativement, le boîtier présente une forme hémisphérique. Dans ce cas, la paroi supérieure serait constituée de la portion d'extrémité de l'hémisphère formant une calotte, tandis que la première paroi latérale serait constituée par la surface annulaire qui s'étend entre la calotte et le plateau de support.

Selon l'invention, le boîtier est compact et rigide. Dans cet exemple, le boîtier **8** est réalisé dans un matériau rigide résistant à l'écrasement, en l'espèce un métal, dimensionné de façon suffisante pour ne pas être endommagé dans le cas où un véhicule, par exemple l'aéronef, viendrait à rouler sur le boîtier.

Le boîtier est également de préférence étanche de manière à résister aux intempéries et à éviter que le sable, l'eau ou la neige ne rentre à l'intérieur du boîtier.

Dans cet exemple, la forme compacte du boîtier est obtenue par le fait que la hauteur **H** du boîtier, correspondant à la distance entre le plateau de support et la paroi supérieure, est sensiblement inférieure à l'envergure **E** du plateau de support.

Dans cet exemple, l'envergure **E** est comprise entre 8 et 30 cm, tandis que la hauteur **H** du boîtier est comprise entre 2 et 4 cm.

En se référant aux figures **1** et **3****,** on constate que, considérées dans un plan parallèle au plateau de support, les dimensions transversales **L1** et **L2** du plateau de support **12** sont supérieures aux dimensions transversales **Il** et **I2** du boîtier **8**, de sorte que le plateau de support présente deux portions de fixation s'étendant latéralement à l'extérieur du boîtier selon deux bords latéraux adjacents du boîtier. Chacune des portions de fixation est munie d'un orifice de fixation respectivement **40** et **42** destiné à recevoir un organe de fixation **46** pour fixer la balise au sol.

En outre, dans ce mode de réalisation non limitatif, les deux organes de fixations sont des systèmes d'ancrage, par exemple tels que ceux décrits dans WO 2014/170574, qui sont composés d'un élément de verrouillage **49** prenant appui sur la face supérieure **14** du plateau de support et d'une ancre **47** reliée à l'élément de verrouillage par un lien souple **48** traversant l'orifice **40.** L'ancre **47** est destinée à être enfoncée et bloquée dans le sol, tandis que l'élément de verrouillage bloque la balise contre le sol en venant en appui contre la face supérieure de la portion de fixation.

Conformément à l'invention, la balise infrarouge **10** comporte en outre un module d'éclairage infrarouge **50** qui comprend un premier émetteur de lumière infrarouge **52** logé dans la première paroi latérale **20,** et un deuxième émetteur de lumière infrarouge **54** logé en partie dans la deuxième paroi latérale **22.** Dans ce mode de réalisation, les premier et deuxième émetteurs de lumière infrarouge sont des diodes luminescentes qui traversent l'épaisseur des première et deuxième parois latérales **20, 22.**

Conformément à l'invention, et tel qu'illustré sur la figure **4****,** le premier émetteur de lumière infrarouge **52** présente une première direction d'éclairage **X1** qui est inclinée d'un angle α par rapport au plateau de support **12,** l'angle d'inclinaison étant environ égal à 25°. On choisira de préférence une valeur comprise entre 10° et 60° et de préférence entre 15° et 30°. On comprend que la première direction d'éclairage **X1** correspond à la direction du faisceau lumineux **F1.**

Dans cet exemple, et avantageusement, le deuxième émetteur de lumière infrarouge **54** présente une deuxième direction d'éclairage **X2** qui est également inclinée par rapport au plateau de support. De préférence, les première et deuxième directions d'éclairage présentent la même inclinaison α par rapport au plateau de support.

Selon un autre aspect avantageux de l'invention, la deuxième direction d'éclairage **X2** est inclinée par rapport à la première direction d'éclairage **X1.** Dans cet exemple, l'angle d'inclinaison β entre la première direction d'éclairage **X1** et la deuxième direction d'éclairage **X2** est environ égale à 90°. Comme expliqué ci-dessus, le choix de l'angle β sera fonction de la géométrie de la zone d'atterrissage **Z**.

Se référant figures **1** et **3**, on constate que les premier et deuxième émetteurs de lumière infrarouge **52**, **54** sont disposés aux extrémités **20a** et **22a** des première et deuxième parois latérales qui sont proches l'une de l'autre de façon que les premier et deuxième émetteurs sont disposés à proximité l'un de l'autre, de part et d'autre de l'arête **28** qui est définie entre la première paroi latérale **20** et la deuxième paroi latérale **22.**

Selon un aspect avantageux de l'invention, considéré selon la longueur de la paroi latérale **20**, **22** correspondante, chaque orifice **40**, **42** est disposé à proximité d'une première extrémité **20b**, **22b** de la paroi latérale lui correspondant, tandis que l'émetteur **54**, **52** associé à la même paroi latérale est disposé à proximité d'une seconde extrémité **20a**, **22a** de ladite paroi latérale opposée à la première extrémité de cette même paroi latérale **20**, **22**. Ceci permet de ne pas masquer l'émetteur de lumière infrarouge lorsqu'un organe de fixation est posé sur la portion de fixation **36**, **38** du plateau de support. Pour alimenter les diodes électroluminescentes du module d'éclairage infrarouge **50**, la balise infrarouge comporte avantageusement une source d'énergie électrique **60** qui est logée dans le boîtier.

Cette source d'énergie électrique comporte un panneau photovoltaïque **62** relié à une batterie **64**, cette dernière étant reliée aux diodes électroluminescentes du module d'éclairage infrarouge par le biais d'un organe de commande **66**.

Dans cet exemple, l'organe de commande **60** est un interrupteur crépusculaire qui a pour fonction d'actionner le module d'éclairage pendant la nuit.

Plus précisément, la batterie **64** est rechargée pendant le jour grâce au panneau photovoltaïque qui transforme les rayons solaires en énergie électrique. La nuit venue, l'interrupteur crépusculaire **66**, qui comporte par exemple un détecteur de lumière ambiante, est activé de sorte que les diodes électroluminescentes infrarouges, alimentées par la batterie **64**, s'allument.

Selon un autre aspect avantageux de l'invention, la paroi supérieure **16** est munie d'une fenêtre **70** qui comporte une vitre **72** entièrement logée dans et affleurant l'épaisseur de la paroi supérieure **16**.

Le panneau photovoltaïque, comme illustré sur la figure **4**, est disposé en-dessous de la vitre **72** et s'étend sensiblement sur toute la surface de la vitre **72**. Le panneau photovoltaïque est positionné de manière sensiblement horizontale en étant tourné vers le ciel de manière à favoriser son exposition aux rayons du soleil.

## Revendications

1. Balise infrarouge (10) pour piste d'atterrissage (P) d'aéronef (A), la balise comportant
un plateau de support (12) destiné à être posé au sol;
un boîtier (8) qui est fixé sur le plateau de support et qui comprend une paroi supérieure (16), au moins une première paroi latérale (20) s'étendant entre le plateau de support (14) et la paroi supérieure (16), et une deuxième paroi latérale (22) adjacente à la première paroi latérale, en ce que, considérées dans un plan parallèle au plateau de support, les dimensions transversales du plateau de support (12) sont supérieures aux dimensions transversales du boîtier, de sorte que le plateau de support (12) présente au moins deux portions de fixation s'étendant latéralement à l'extérieur du boîtier selon deux bords latéraux adjacents du boîtier, lesdites portions de fixation (36,38) comportant des moyens de fixation pour la fixation de la balise au sol, les moyens de fixation comprenant au moins deux orifices de fixation, chaque orifice (40, 42) de fixation étant ménagé dans l'une des portions de fixation;
un module d'éclairage infrarouge (50) comprenant au moins un premier émetteur de lumière infrarouge (52) et un deuxième émetteur de lumière infrarouge (54), le premier émetteur de lumière infrarouge étant logé au moins en partie dans la première paroi latérale (22) et ayant une première direction d'éclairage (X1) inclinée par rapport au plateau de support, et le deuxième émetteur de lumière infrarouge (54) étant logé au moins en partie dans la deuxième paroi latérale (22) et ayant une deuxième direction d'éclairage (X2) inclinée par rapport au plateau de support.

2. Balise infrarouge selon la revendication 1, **caractérisée en ce que** l'angle d'inclinaison (α) entre la première direction d'éclairage (X1) et le plateau de support (14) est compris entre 10° et 60°, de préférence entre 15° et 30°.

3. Balise infrarouge selon la revendication **1 ou 2, caractérisée en ce que** la deuxième direction d'éclairage (X2) est inclinée par rapport à la première direction d'éclairage (X1).

4. Balise infrarouge selon la revendication **3, caractérisée en ce que** l'angle d'inclinaison (β) entre la première direction d'éclairage (X1) et la deuxième direction d'éclairage (X2) est environ égal à 90°.

5. Balise infrarouge selon la revendication **4, caractérisée en ce que** les premier et deuxième émetteurs de lumière infrarouge (52, 54) sont disposés aux extrémités (20a, 22a) des première et deuxième parois latérales qui sont adjacentes l'une de l'autre de façon que les premier et deuxième émetteurs sont disposés à proximité l'un de l'autre, de part et d'autre d'une arête (28) définie entre la première paroi latérale (20) et la deuxième paroi latérale (22).

6. Balise infrarouge selon l'une quelconque des revendications **1** à **5**, **caractérisée en ce que** ledit premier émetteur de lumière infrarouge (52) comporte au moins une diode électroluminescente logée au moins en partie dans la première paroi latérale (20).

7. Balise infrarouge selon l'une quelconque des revendications **1** à **6, caractérisée en ce qu'**elle comporte une source d'énergie électrique (60) logée dans le boîtier et alimentant le module d'éclairage infrarouge (50).

8. Balise infrarouge selon la revendication **7**, **caractérisée en ce que** la source d'énergie électrique (60) comporte au moins un panneau photovoltaïque (62).

9. Balise infrarouge selon la revendication **8, caractérisée en ce que** la paroi supérieure est munie d'une fenêtre (70), et **en ce que** le panneau photovoltaïque (62) est disposé sous ladite fenêtre.

10. Balise infrarouge selon l'une quelconque des revendications **7** à **9**, **caractérisée en ce qu'**elle comporte en outre un organe de commande (66) connecté à la source d'énergie électrique et au module d'éclairage (60) et configuré de sorte que le module d'éclairage est actionné pendant la nuit.

11. Balise infrarouge selon la revendication **10, caractérisée en ce que** l'organe de commande (66) comprend un interrupteur crépusculaire.

12. Balise infrarouge selon l'une quelconque des revendications **1** à **11**, **caractérisée en ce que**, considéré selon la longueur de la première paroi latérale (20), l'orifice est disposé à proximité d'une première extrémité (20b) de la première paroi latérale, tandis que le premier émetteur est disposé à proximité (20a) d'une seconde extrémité de la première paroi latérale opposée à la première extrémité (20b) de la première paroi latérale.

13. Balise infrarouge selon la revendication **12**, **caractérisée en ce qu'**elle comprend en outre au moins un organe de fixation (46) qui coopère avec l'orifice de fixation (40).

14. Balise infrarouge selon la revendication **13**, **caractérisée en ce que** la portion de fixation (36, 38) comporte une paroi supérieure (14) destinée à recevoir un élément de verrouillage (49) de l'organe de fixation, et **en ce que** l'organe de fixation comporte un lien (48) traversant l'orifice et reliant l'élément de verrouillage à une ancre (47) de l'organe de fixation destinée à être enfoncée dans le sol.

15. Balise infrarouge selon l'une quelconque des revendications précédentes, **caractérisée en ce que** le boîtier (62) est réalisé dans un matériau rigide résistant à l'écrasement, de préférence en métal ou en matériau composite, et présente une hauteur sensiblement inférieure à l'envergure (E) du plateau de support conférant au boîtier une forme compacte.

16. Piste d'atterrissage (P) d'aéronef comportant une zone d'atterrissage (Z) et une pluralité de balises infrarouges (10) selon l'une quelconque des revendications précédentes disposées aux coins (Z1, Z2, Z3, Z4) de la zone d'atterrissage.

## Patentansprüche

1. Infrarotleuchtfeuer (10) für eine Landebahn (P) eines Flugzeugs (A), wobei das Leuchtfeuer umfasst:
eine Tragplatte (12), die dazu bestimmt ist, am Boden platziert zu werden,
ein Gehäuse (8), das an der Tragplatte befestigt ist und das eine obere Wand (16), wenigstens eine erste Seitenwand (20), die sich zwischen der Tragplatte (14) und der oberen Wand (16) erstreckt, sowie eine zu der ersten Seitenwand benachbarte zweite Seitenwand (22) aufweist, wobei die Querabmessungen der Tragplatte (12) in einer zu der Tragplatte parallelen Ebene betrachtet größer als die Querabmessungen des Gehäuses sind, so dass die Tragplatte (12) wenigstens zwei Befestigungsabschnitte aufweist, die sich seitlich außerhalb des Gehäuses entlang zweier benachbarter Seitenkanten des Gehäuses erstrecken, wobei die Befestigungsabschnitte (36, 38) Befestigungsmittel zum Befestigen des Leuchtfeuers am Boden umfassen, wobei die Befestigungsmittel wenigstens zwei Befestigungsöffnungen aufweisen, wobei jede Befestigungsöffnung (40, 42) in einem der Befestigungsabschnitte ausgebildet ist,
ein Infrarotbeleuchtungsmodul (50), umfassend wenigstens einen ersten Infrarotlichtemitter (52) und einen zweiten Infrarotlichtemitter (54), wobei der erste Infrarotlichtemitter wenigstens teilweise in der ersten Seitenwand (22) aufgenommen ist und eine erste Beleuchtungsrichtung (X1) aufweist, die gegenüber der Tragplatte geneigt ist, und wobei der zweite Infrarotlichtemitter (54) wenigstens teilweise in der zweiten Seitenwand (22) aufgenommen ist und eine zweite Beleuchtungsrichtung (X2) aufweist, die gegenüber der Tragplatte geneigt ist.

2. Infrarotleuchtfeuer nach Anspruch 1, **dadurch gekennzeichnet, dass** der Neigungswinkel (α) zwischen der ersten Beleuchtungsrichtung (X1) und der Tragplatte (12) zwischen 10° und 60°, vorzugsweise zwischen 15° und 30° beträgt.

3. Infrarotleuchtfeuer nach Anspruch 1 oder 2, **dadurch gekennzeichnet, dass** die zweite Beleuchtungsrichtung (X2) gegenüber der ersten Beleuchtungsrichtung (X1) geneigt ist.

4. Infrarotleuchtfeuer nach Anspruch 3, **dadurch gekennzeichnet, dass** der Neigungswinkel (β) zwischen der ersten Beleuchtungsrichtung (X1) und der zweiten Beleuchtungsrichtung (X2) etwa gleich 90° beträgt.

5. Infrarotleuchtfeuer nach Anspruch 4, **dadurch gekennzeichnet, dass** der erste und der zweite Infrarotlichtemitter (52, 54) an den Enden (20a, 22a) der ersten und der zweiten Seitenwand angeordnet sind, die zueinander benachbart sind, so dass der erste und der zweite Emitter auf beiden Seiten einer Kante (28), die zwischen der ersten Seitenwand (20) und der zweiten Seitenwand (22) definiert ist, nahe beieinander angeordnet sind.

6. Infrarotleuchtfeuer nach einem der Ansprüche 1 bis 5, **dadurch gekennzeichnet, dass** der erste Infrarotlichtemitter (52) wenigstens eine Leuchtdiode umfasst, die wenigstens teilweise in der ersten Seitenwand (20) aufgenommen ist.

7. Infrarotleuchtfeuer nach einem der Ansprüche 1 bis 6, **dadurch gekennzeichnet, dass** es eine elektrische Energiequelle (60) umfasst, die in dem Gehäuse aufgenommen ist und das Infrarotbeleuchtungsmodul (50) versorgt.

8. Infrarotleuchtfeuer nach Anspruch 7, **dadurch gekennzeichnet, dass** die elektrische Energiequelle (60) wenigstens ein Photovoltaik-Panel (62) umfasst.

9. Infrarotleuchtfeuer nach Anspruch 8, **dadurch gekennzeichnet, dass** die obere Wand mit einem Fenster (70) versehen ist und dass das Photovoltaik-Panel (62) unter dem Fenster angeordnet ist.

10. Infrarotleuchtfeuer nach einem der Ansprüche 7 bis 9, **dadurch gekennzeichnet, dass** es ferner ein Steuerorgan (66) umfasst, das an die elektrische Energiequelle und das Beleuchtungsmodul (60) angeschlossen ist und das so ausgelegt ist, dass das Beleuchtungsmodul während der Nacht betätigt wird.

11. Infrarotleuchtfeuer nach Anspruch 10, **dadurch gekennzeichnet, dass** das Steuerorgan (66) einen Dämmerungsschalter umfasst.

12. Infrarotleuchtfeuer nach einem der Ansprüche 1 bis 11, **dadurch gekennzeichnet, dass** die Öffnung entlang der Länge der ersten Seitenwand (20) betrachtet in der Nähe eines ersten Endes (20b) der ersten Seitenwand angeordnet ist, während der erste Emitter in der Nähe eines zweiten Endes (20a) der ersten Seitenwand, welches dem ersten Ende (20b) der ersten Seitenwand gegenüber liegt, angeordnet ist.

13. Infrarotleuchtfeuer nach Anspruch 12, **dadurch gekennzeichnet, dass** es ferner wenigstens ein Befestigungsorgan (46) umfasst, das mit der Befestigungsöffnung (40) zusammenwirkt.

14. Infrarotleuchtfeuer nach Anspruch 13, **dadurch gekennzeichnet, dass** der Befestigungsabschnitt (36, 38) eine obere Wand (14) aufweist, die dazu bestimmt ist, ein Verriegelungselement (49) des Befestigungsorgans aufzunehmen, und dass das Befestigungsorgan ein Verbindungsteil (48) umfasst, das die Öffnung durchgreift und das Verriegelungselement mit einem Anker (47) des Befestigungsorgans verbindet, welcher dazu bestimmt ist, in den Boden eingetrieben zu werden.

15. Infrarotleuchtfeuer nach einem der vorhergehenden Ansprüche, **dadurch gekennzeichnet, dass** das Gehäuse (62) aus einem gegen Zusammendrücken resistenten starren Material besteht, vorzugsweise aus Metall oder aus Verbundwerkstoff, und eine Höhe aufweist, die deutlich geringer ist als die Spannweite (E) der Tragplatte, welche dem Gehäuse eine kompakte Form verleiht.

16. Landebahn (P) eines Flugzeugs, umfassend einen Landebereich (Z) und eine Vielzahl von Infrarotleuchtfeuern (10) nach einem der vorhergehenden Ansprüche, die an den Ecken (Z1, Z2, Z3, Z4) des Landebereichs angeordnet sind.

## Claims

1. An infrared beacon (10) for an aircraft (A) landing strip (P), the beacon including:
a support plate (12) intended to be placed on the ground;
a casing (8) which is fixed on the support plate and which comprises an upper wall (16), at least a first side wall (20) extending between the support plate (14) and the upper wall (16), and a second side wall (22) adjacent to the first side wall, in that, considered in a plane parallel to the support plate, the transverse dimensions of the support plate (12) are larger than the transverse dimensions of the casing, so that the support plate (12) has at least two fixing portions extending laterally outside the casing along two adjacent side edges of the casing, said fixing portions (36, 38) including fixing means for fixing the beacon to the ground, the fixing means comprising at least two fixing orifices, each fixing orifice (40, 42) being arranged in one of the fixing portions;
an infrared lighting module (50) comprising at least a first infrared light emitter (52) and a second infrared light emitter (54), the first infrared light emitter being housed at least in part in the first side wall (22) and having a first lighting direction (X1) inclined with respect to the support plate, and the second infrared light emitter (54) being housed at least in part in the second side wall (22) and having a second lighting direction (X2) inclined relative to the support plate.

2. The infrared beacon according to claim 1, **characterized in that** the angle of inclination (*α*) between the first lighting direction (X1) and the support plate (14) is comprised between 10° and 60°, preferably between 15° and 30°.

3. The infrared beacon according to claim 1 or 2, **characterized in that** the second lighting direction (X2) is inclined relative to the first lighting direction (X1).

4. The infrared beacon according to claim 3, **characterized in that** the angle of inclination (*β*) between the first lighting direction (X1) and the second lighting direction (X2) is approximately equal to 90°.

5. The infrared beacon according to claim 4, **characterized in that** the first and second infrared light emitters (52, 54) are disposed at the ends (20a, 22a) of the first and second side walls which are adjacent to each other such that the first and second emitters are disposed in close proximity to each other, on either side of a ridge (28) defined between the first side wall (20) and the second side wall (22).

6. The infrared beacon according to any one of claims 1 to 5, **characterized in that** said first infrared light emitter (52) includes at least one light-emitting diode housed at least in part in the first side wall (20).

7. The infrared beacon according to any one of claims 1 to 6, **characterized in that** it includes an electric power source (60) housed in the casing and supplying the infrared lighting module (50).

8. The infrared beacon according to claim 7, **characterized in that** the electric power source (60) includes at least one photovoltaic panel (62).

9. The infrared beacon according to claim 8, **characterized in that** the upper wall is provided with a window (70), and **in that** the photovoltaic panel (62) is disposed under said window.

10. The infrared beacon according to any one of claims 7 to 9, **characterized in that** it further includes a control member (66) connected to the electric power source and to the lighting module (60) and configured so that the lighting module is actuated during the night.

11. The infrared beacon according to claim 10, **characterized in that** the control member (66) comprises a twilight switch.

12. The infrared beacon according to any one of claims 1 to 11, **characterized in that**, considered according to the length of the first side wall (20), the orifice is disposed in the vicinity of a first end (20b) of the first side wall, while the first emitter is disposed in the vicinity of a second end (20a) of the first side wall opposite the first end (20b) of the first side wall.

13. The infrared beacon according to claim 12, **characterized in that** it further comprises at least one fixing member (46) which cooperates with the fixing orifice (40).

14. The infrared beacon according to claim 13, **characterized in that** the fixing portion (36, 38) includes an upper wall (14) intended to receive a locking element (49) of the fixing member, and **in that** the fixing member includes a link (48) passing through the orifice and connecting the locking element to an anchor (47) of the fixing member intended to be driven into the ground.

15. The infrared beacon according to any one of the preceding claims, **characterized in that** the casing (62) is made of a crush-resistant rigid material, preferably of metal or of composite material, and has a height substantially smaller than the span (E) of the support plate giving the casing a compact shape.

16. An aircraft landing strip (P) including a landing zone (Z) and a plurality of infrared beacons (10) according to any one of the preceding claims disposed at the corners (Z1, Z2, Z3, Z4) of the landing zone.
